# FASCICULE DE BREVET EUROPEEN

(11) **EP 1 153 376 B1**
(45) Date de publication et mention de la délivrance du brevet: **17.12.2008**
(21) Numéro de dépôt: 00906428.8
(22) Date de dépôt: 18.02.2000
(51) Int. Cl.: G07F 7/10, H04Q 7/32

(54) **PROCEDE DE TELEPAIEMENT ET SYSTEME POUR LA MISE EN OEUVRE DE CE PROCEDE**
VERFAHREN ZUM FERNBEZAHLEN UND SYSTEM ZUR DURCHFÜHRUNG DES VERFAHRENS
TELEPAYMENT METHOD AND SYSTEM FOR IMPLEMENTING SAID METHOD

(30) Priorité: 19.02.1999 FR 9902093
(43) Date de publication de la demande: 14.11.2001
(73) Titulaire: FRANCE TELECOM, 75015 Paris (FR)
(72) Inventeur: PAILLES, Jean-Claude, F-14610 Epron (FR); LEVIONNAIS, Philippe, F-14000 Caen (FR)
(74) Mandataire: de la Fouchardière, Marie-Noelle
(86) Numéro de dépôt international: PCT/FR2000/000412
(87) Numéro de publication internationale: WO 2000/049585

(56) Documents cités:
- WO-A-96/13814
- WO-A-96/25828
- WO-A-98/11519
- WO-A-98/34203
- WO-A-98/37524
- WO-A-98/42173

## Description

### Domaine technique

La présente invention a pour objet un procédé de télépaiement et un système pour la mise en oeuvre de ce procédé.

### Etat de la technique antérieure

Le télépaiement, ou paiement à distance, est bien connu. Il peut prendre des formes plus ou moins élaborées :
- par téléphone, un client peut communiquer son numéro de carte bancaire à un commerçant,
- avec un ordinateur personnel, le client peut transmettre ce numéro au serveur du commerçant,
- avec les appareils de type Minitel (marque déposée), qui disposent d'un lecteur de carte à puce, l'utilisateur insère sa carte bancaire dans le lecteur et fournit un code confidentiel ; si le code est correct, le numéro de la carte est transmis au commerçant.

Ces procédures n'offrent pas toujours la sécurité souhaitée. A cet égard, le télépaiement soulève des difficultés spécifiques. Ainsi, la protection de ce qu'on appelle les "identifiants" des cartes bancaires (numéro de carte/date de validité, etc...) appelés aussi PAN ("Primary Account Number"), doit être assurée efficacement ; l'espionnage sur le réseau ou la réutilisation de ces numéros par un commerçant indélicat, sont des risques sérieux qu'il faut prendre en compte dans le paiement à distance.

Par ailleurs, le caractère impersonnel de la relation client-commerçant peut inquiéter le client qui se pose inévitablement la question de savoir si le commerçant est sérieux et s'il va livrer effectivement le bien commandé. L'authentification du commerçant est donc nécessaire.

Réciproquement, se pose le problème du refus possible de la marchandise par le client : pour que le client n'ait pas les moyens de nier son achat, il faut un mécanisme fort de signature électronique reconnu qui permette de l'engager réglementairement dans sa décision d'achat. Si de tels mécanismes ne sont pas mis en place, il existe alors, pour le commerçant honnête, un risque réel de non paiement.

Toutes ces difficultés sont des freins au développement du commerce électronique. La présente invention a justement pour but de remédier à ces difficultés.

Le document WO-A-99/03243 décrit un système et un procédé pour gérer des transactions où un serveur de médiation est placé entre un serveur et un poste client. Dans ce système, c'est le client qui envoie une requête au serveur, lequel répond à travers le serveur de médiation qui facture le client.

Le document WO-A-96/25828 décrit un procédé de télépaiement dans une station mobile.

Le document WO-A-96/13814 décrit un système de télépaiement utilisant le téléphone mobile.

Le document WO-A-9834203 décrit un système pour réaliser une transaction financière comportant des moyens pour mémoriser un code d'identification financière représentant un crédit ou un débit ou toute autre information financière, et des moyens pour transmettre une information afin d'effectuer la transaction.

Ce système ne permet pas d'authentifier un commerçant engagé dans une transaction avec un client afin de permettre au client d'effectuer la transaction en toute sécurité.

### Exposé de l'invention

A cette fin, l'invention propose d'abord d'utiliser, au niveau du client, des équipements particuliers qui sont des équipements mobiles, par exemple du type GSM ("Global System for Mobile Communications"). Elle propose aussi l'intervention d'une entité qui va s'assurer du bon déroulement de la transaction. A propos du premier aspect de l'invention, on sait que les équipements mobiles se développent rapidement en France et à l'étranger : 10 millions d'équipements en France fin 98 et dans le mode, 100 millions. Il faut rappeler les fonctions que l'on trouve dans un mobile, en particulier de type GSM, afin de mieux comprendre l'intérêt du procédé de télépaiement selon l'invention.

Dans les téléphones GSM, on retrouve les fonctions classiques d'un téléphone fixe (numéroter pour appeler, être appelé, communiquer en vocal) et des fonctions d'envoi ou de réception de données :
1. envoi de données en DTMF ("Dual Tone Multi Frequency") pendant la communication vocale, données correspondant au code des touches que l'utilisateur actionne ;
2. émission-réception de messages courts de texte ("short messages" ou SM), qui peuvent être mémorisés dans une carte dite carte d'identification d'abonné ou carte SIM ("Subscriber Identification Module") ; ces messages peuvent être affichés sur un écran de l'équipement mobile grâce à des touches particulières ; ces messages restent dans la carte jusqu'à ce que l'utilisateur les efface ;
3. émission-réception de messages courts (SM) de données, fabriqués et traités par un programme dit "toolkit", TK en abrégé ;
4. les programmes auxquels il est fait allusion ci-dessus sont des programmes qui résident dans la carte SIM et qui permettent, en plus des traitements internes (calcul, gestion de données) que peut faire tout programme, d'agir sur l'affichage du mobile, de saisir les touches du clavier actionnées par l'utilisateur, de recevoir un message SM, d'émettre un message SM ;
5. une possibilité nouvelle est apparue sur certains équipements mobiles : admettre une deuxième carte à puce, en plus de la carte SIM, ce qui permet, par exemple, d'utiliser un portable GSM avec une carte de paiement bancaire (CB) comme il en existe près de 30 millions en France, ou une carte porte-monnaie électronique (PME) comme il en existe beaucoup en Europe ou dans le monde.

On peut noter que les équipements mobiles anciens (première génération, c'est-à-dire les GSM en phases 1 et 2) possédaient seulement les fonctions N°1 et 2. Les fonctions N°3 et 4 sont apparues récemment et s'étendront rapidement à tous les mobiles dits de deuxième génération (phase 2+) ; la possibilité N°5 ne concerne pour l'instant qu'un faible pourcentage des mobiles de deuxième génération mais est appelée à se développer.

Selon le second aspect de l'invention, le télépaiement s'effectue par l'entremise d'une entité qu'on appellera "passerelle", faisant office de serveur de paiement. Cette passerelle possède un équipement de télécommunications lui permettant d'établir, avec un commerçant, une liaison quelconque (téléphonique, par le réseau Internet, etc...) et avec le client une liaison téléphonique utilisant l'équipement mobile GSM de celui-ci. La passerelle a essentiellement pour fonction d'établir une liaison entre le commerçant et le client en authentifiant à la fois le commerçant et le client, et de recevoir les données confidentielles du client lui permettant d'effectuer le paiement.

La sécurité du client et du commerçant est ainsi assurée et le paiement effectué.

De façon plus précise, la présente invention a pour objet un procédé de télépaiement impliquant une première entité dite "le client" disposant d'un premier équipement téléphonique et une deuxième entité dite "le commerçant" disposant d'un deuxième équipement de télécommunications, ce procédé étant caractérisé en ce que l'équipement du client est un équipement téléphonique mobile et en ce qu'il implique en outre une troisième entité, dite "passerelle" disposant d'un troisième équipement de télécommunications apte à établir une liaison avec l'équipement du commerçant et une liaison téléphonique avec l'équipement du client, ce procédé comprenant les échanges suivants entre les équipements des trois entités :
a)le commerçant adresse à la passerelle des données définissant une offre de prestation, avec notamment le montant à acquitter par le client, et ajoute à ces données des données d'identification du commerçant,
b)la passerelle authentifie le commerçant, convertit les données de l'offre en un message adapté aux performances de l'équipement mobile du client et adresse au client ce message ainsi que des données d'authentification de la passerelle,
c)le client authentifie la passerelle et adresse en retour à celle-ci un message d'accord, ainsi que des informations confidentielles permettant le paiement du montant de la prestation,
d)la passerelle authentifie le client, vérifie que le paiement est possible et adresse au commerçant un message stipulant que le montant de la prestation est bien susceptible d'être acquitté.

De préférence, l'équipement mobile du client est de type GSM, quelle que soit la génération (connue ou à venir).

La troisième entité peut, dans certains cas, être située chez le commerçant, ou dans d'autres cas, dans la banque.

La présente invention a également pour objet un système pour la mise en oeuvre de ce procédé.

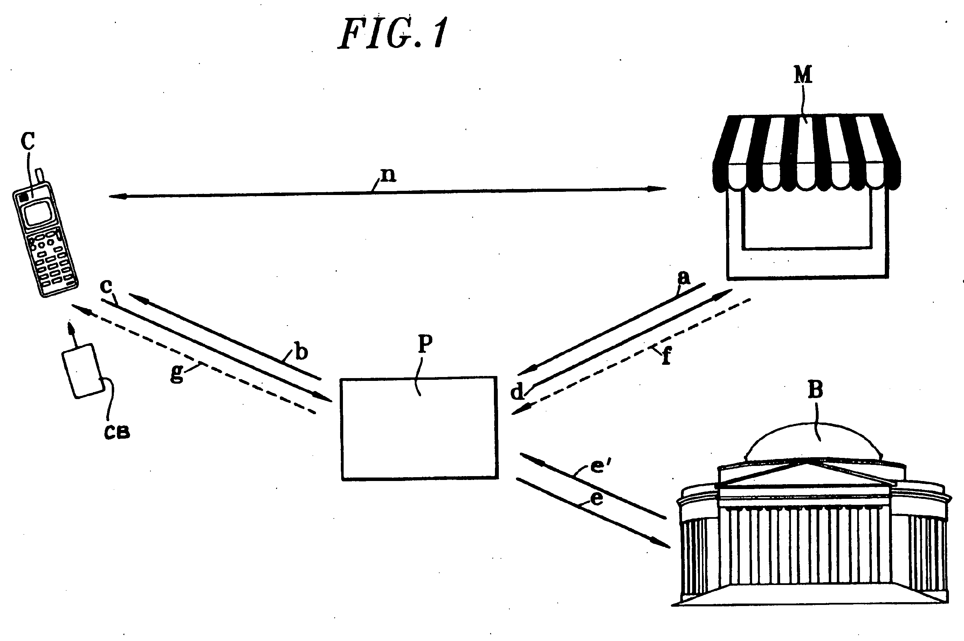

### Brève description du dessin

La figure unique annexée illustre l'architecture générale du système de l'invention et les différents échanges établis entre les divers équipements.

### Exposé de modes particuliers de réalisation

Sur la figure annexée, C désigne l'équipement mobile du client, M l'équipement du commerçant, P l'équipement de la passerelle, B une ou des banques et CB une carte de paiement bancaire ou une carte PME. Les flèches symbolisent des échanges entre tous ces équipements. On supposera, dans la description qui suit, que l'équipement mobile du client est un équipement GSM et que la carte est une carte bancaire. Pour plus de clarté, la passerelle est dissociée des équipements du commerçant et de la banque, mais, dans certains cas, cette passerelle pourrait être située chez le commerçant (ou dans la banque).

L'opération de télépaiement qui concerne plus spécialement l'invention peut être précédée d'une négociation entre le client et le commerçant, négociation symbolisée par la double flèche n sur la figure. Le commerçant peut être une personne physique munie d'un téléphone ou un serveur vocal. Dans ce cas, la négociation n consiste en un échange de messages vocaux envoyés par le serveur au client et de réponses du client sous forme de codes DTMF correspondant aux touches actionnées sur le clavier de l'équipement du mobile. Par ailleurs, le client doit donner au commerçant son numéro de mobile, à moins que ce commerçant ait un téléphone indiquant le numéro de téléphone appelant.

Après cet échange préliminaire, le client raccroche et la phase de négociation est terminée. On peut observer aussi que le commerçant peut être également un serveur sur Internet. Suivent alors des échanges permettant un engagement réciproque du client et du marchand sur l'offre et le paiement. Le commerçant adresse un message a) à la passerelle P par exemple par un Minitel (marque déposée) ou par un équipement connecté au réseau Internet, communique à la passerelle P une description contractuelle de la prestation proposée et son prix. Par exemple, ce message contiendra : le numéro du mobile, la date, l'identification du commerçant, l'identification du bien, la description du bien, la quantité, le prix, ... En outre, le message a) contient des données de sécurité permettant à la passerelle P d'authentifier le commerçant M.

Un message b) est alors envoyé au client C sous une forme dépendant du type d'équipement de mobile GSM et de ses capacités.

Par un message c), le client C accepte ou refuse l'offre qui lui est faite. En cas d'acceptation, la passerelle P peut demander une autorisation à la banque B par un échange e). Celle-ci peut adresser une réponse e' à la passerelle. Dans le cas où le paiement est accepté, la passerelle P adresse par un message d) au commerçant M. Eventuellement, le commerçant M peut envoyer une confirmation f) à la passerelle P, pour indiquer, par exemple, une date de livraison, ou bien une information particulière telle qu'un code d'accès à un hôtel où une chambre aura été réservée. Cette confirmation est adressée au client par le message g). Dans un autre exemple, le client obtient d'un prestataire quelconque (Télévision, Cinéma, Internet) un code d'accès qui lui permet d'accéder effectivement à un service : ce code peut être, par exemple, tapé sur la télécommande du décodeur de télévision pour voir effectivement le programme précédemment acheté, ou encore tapé sur le clavier d'un portillon donnant accès au cinéma, ou sur le clavier de l'ordinateur personnel au moment de se connecter à ce service. Cette confirmation est répercutée sous forme de message court (SM) envoyé au client.

On peut observer que, dans le contexte de la téléphonie mobile, un certain temps peut séparer chacune de ces différentes phases : en effet, après la négociation préliminaire, les conditions de propagation liées au déplacement du mobile ou à l'état de sa batterie font peut être que le message a) sera retardé de plusieurs minutes. Il faut donc que le système soit organisé pour prendre en compte tous ces aspects spécifiques de la technologie GSM.

Pour décrire plus avant la nature des échanges, on peut distinguer quatre cas selon la nature de l'équipement mobile du client :

### 1. Cas d'un équipement mobile de première génération

Dans ce cas, les mobiles n'ont pas de capacité de traitement pour envoyer un message court SM avec une signature électronique ; par ailleurs, ces mobiles ont des capacités d'affichage faibles, qui ne permettent pas toujours un affichage confortable d'un message descriptif d'une offre, laquelle peut comprendre jusqu'à une centaine de caractères. Le procédé de l'invention comprend alors les échanges suivants, en plus de l'échange a) :
Echange b) _{:} la passerelle P envoie au client un message fixe du type : "rappelez la passerelle au N°xxxxxxxx". Beaucoup de portables actuels ont une capacité de numérotation automatique d'un numéro reçu. Dans ce cas, il suffit d'appuyer sur une simple touche "appel" pour que le numéro xxxxxxxx soit appelé. Sinon, le client devra rentrer manuellement le numéro xxxxxxxx.
Echange c) : il est réalisé sous forme vocale entre la passerelle P, qui peut être un serveur audio et le portable. Ceci permet :
   - d'authentifier le client en lui demandant un mot de passe préalablement convenu entre le client et l'opérateur de la passerelle P,
   - de prendre connaissance de l'offre (ou des offres si il y en a plusieurs, et de choisir celle qui l'intéresse) ; pour ce faire :
      - la passerelle P traduira sous forme vocale l'offre reçue lors de l'échange a) grâce à un système de synthèse vocale,
      - le client pourra choisir cette offre et demander son paiement en appuyant, par exemple, sur la touche OK ou passer à l'offre suivante (touche #).
Echange d) : la passerelle P peut simplement confirmer au commerçant que le paiement a été fait.
Echange e) : la passerelle P ayant authentifié le client, et connaissant par ailleurs le numéro de carte bancaire de celui-ci, elle peut alors demander une autorisation aux banques si elle le juge nécessaire. On fait l'hypothèse que le client donne, lors de l'abonnement à ce service, son numéro de carte bancaire. D'autres procédés de paiement pourraient être utilisés : autorisation de prélèvement par exemple, que le client donnerait lors de l'abonnement.
Echange f) : le commerçant peut alors renvoyer une information particulière (exemples donnés plus haut) grâce au message f).
Echange g) : la passerelle P renvoie le message f) au client, sous forme de message court SM. La passerelle P peut mémoriser ces messages à des fins de levée de litiges entre client et commerçant, au cas où de tels litiges surviendraient ultérieurement.

Ce mode particulier de mise en oeuvre du procédé répond bien aux soucis de sécurité exposés plus haut. Il se fonde en effet sur une connaissance par la passerelle des clients et des commerçants :
- protection du numéro de carte bancaire : la variante décrite se fonde sur la correspondance entre un identifiant (numéro de téléphone du mobile) authentifiant par le mot de passe le numéro de carte bancaire dans la passerelle P (qui est une entité de confiance par définition). Le numéro de la carte bancaire peut être enregistré dans la passerelle lors de l'abonnement du client au service ;
- le commerçant doit s'authentifier auprès de la passerelle lors de l'échange a) ;
- l'engagement du client tient au fait que le client donne à la passerelle, entité de confiance, son mot de passe ; dans le cas de la variante décrite, le client accède à la passerelle en composant un numéro de téléphone mais aussi un code confidentiel ; celui-ci est à considérer aussi comme code d'accès au service délivré quand on est abonné.

### 2. Cas d'un équipement mobile de deuxième génération

On distinguera le cas où l'équipement mobile ne contient qu'une carte SIM et le cas où cet équipement contient une seconde carte du type carte bancaire.

### 2a. Cas d'un équipement mobile à une seule carte SIM

Dans ce cas, l'équipement mobile contient une carte à puce SIM capable d'enregistrer un programme dit SIM-TOOLKIT capable d'effectuer des traitements internes (calcul, gestion de données), d'agir sur l'affichage du mobile, de saisir les touches du clavier actionnées par l'utilisateur, de recevoir un message court, d'émettre un tel message, etc...

Dans ce cas, le système peut être ouvert, et comprendre plusieurs passerelles, qui ignorent les données propres aux équipements mobiles des clients. Chaque commerçant doit s'adresser à une passerelle particulière auprès de laquelle il est abonné.

Dans ce mode de mise en oeuvre :
- Le numéro de carte bancaire (PAN) est mémorisé dans le SIM ; il est transporté de façon sûre (confidentielle) jusqu'à la passerelle, dans l'échange c).
- Cet échange c) contient, de plus, une signature électronique qui va constituer une preuve de l'engagement du client dans cette transaction. A cet effet, le client doit préalablement fournir à la carte SIM un code confidentiel (CC) sans lequel celle-ci refuse de signer.
- L'authentification de la passerelle est assurée par un authentifiant donné par le message lors de l'échange b), et vérifié par le SIM ; la clé qui permet de vérifier cet authentifiant est la même que celle qui sert à chiffrer le PAN, et ceci garantit donc que seule une passerelle authentique est susceptible d'acquérir un PAN.

Dans un mode de mise en oeuvre avantageux, on utilise un système à clé publique avec arbre de certification. Cette évolution permet en effet de concevoir des systèmes simples, sûrs et ouverts. Cette technique est connue. On ne donnera donc que son mode d'application au présent procédé.

On désigne par A une autorité "racine" de l'arbre de certification qui certifie les différents serveurs de paiement. Elle certifie directement ou indirectement à travers une chaîne de certification à un ou plusieurs niveaux, les différents clients, donc en fait les clés secrètes et publiques (Si, Pi) qui sont dans le SIM et qui permettent de signer les ordres de télépaiement.

Dans l'échange b), le message contient alors l'identification de la passerelle, la date, l'identification du commerçant, l'identification du bien ou du service choisi, la description du bien ou du service choisi, la quantité, le prix, ... la clé publique de la passerelle, le certificat Cert(P) qui est le certificat de la passerelle attribué par l'entité A hiérarchiquement supérieure aux passerelles. Cert(P) est en fait la signature par cette autorité A de l'identité de la passerelle et de sa clé publique P : Cert(P)=SA (identités SP, P, ... ) . La clé publique PA correspondant à SA sera chargée dans tous les SIM "TOOLKIT" ayant cette application télépaiement.

A la réception du message, le programme de SIM va, à l'aide de PA, vérifier le certificat Cert(P) et donc obtenir P de façon sûre. Il va afficher un message "télépaiement" sur l'afficheur du portable. Le client pourra afficher les messages de l'offre, présents à cet instant : il obtient donc sur l'afficheur : l'identification du commerçant, la description du bien choisi, la quantité, le prix.

Pour passer commande, donc payer, le client va introduire un code confidentiel CC que le SIM va comparer au CC interne qu'il mémorise. Si le code est correct, le SIM va envoyer le message c) contenant :
- l'ordre (avec la date, l'identification du commerçant, l'identification du bien ou du service choisi, la quantité, le prix, ...),
- les données de la carte chiffrées par la clé publique soit P(PAN),
- la signature de l'ordre de paiement Si (ordre de paiement),
- Pi, et les certificats de Pi.

Le message délivré à la passerelle dans l'échange c) parvient à la passerelle et celle-ci effectue les traitements suivants :
- vérification du certificat de Pi,
- vérification de la signature de l'ordre Si (ordre de paiement),
- déchiffrement de PAN par le calcul de S(P(PAN))=PAN pour obtenir le numéro de carte bancaire du client.

La passerelle ayant authentifié le client et connaissant, par ailleurs, le numéro de carte bancaire de celui-ci, elle peut alors demander une autorisation aux banques si elle le juge nécessaire (échange e)).

La passerelle peut simplement confirmer au commerçant que le paiement a été fait (d). Le commerçant peut alors renvoyer une information particulière (exemples donnés plus haut) grâce au message f)).

La passerelle renvoie le message au client, sous forme de message court SM. La passerelle mémorise ces messages à des fins de levée de litiges entre client et commerçant, au cas où de tels litiges surviendraient ultérieurement.

Ce mode de mise en oeuvre permet bien d'atteindre les objectifs visés, relativement à la sécurité :
- protection du numéro de carte bancaire : la variante décrite se fonde sur le chiffrement du PAN entre le mobile et la passerelle,
- le commerçant doit s'authentifier auprès de la passerelle de l'échange a). Par ailleurs, la passerelle est authentifiée indirectement par le mobile : plus exactement, si une fausse passerelle tentait de faire cette procédure, elle serait obligée, pour passer les tests de clés, d'emprunter la clé publique P et le certificat Cert(P) d'une passerelle authentique, et donc ne pourrait pas déchiffrer le PAN, ne connaissant pas la clé secrète correspondant à la clé publique P,
- l'engagement du client vient de ce que le client donne à la passerelle une signature Si (ordre de paiement) qui peut avoir une valeur juridique.

### 2b. Cas d'un équipement mobile à deux cartes

Dans ce cas, l'équipement mobile contient une carte SIM comme précédemment, mais encore un deuxième lecteur de carte adapté à la carte bancaire. Il est alors possible d'établir un dialogue avec cette seconde carte. Les différents échanges peuvent alors être les suivants :
Echange n) : Cet échange préliminaire peut être effectué notamment :
   - par contact téléphonique entre le client et le commerçant afin de négocier la transaction,
   - par navigation et saisie sur le site Internet du commerçant,
   - lors de ce premier contact la description du bien, le prix et les coordonnées du client sont enregistrées chez le commerçant.
Echange a) : l'offre du commerçant est envoyée à la passerelle afin d'être enregistrée et gérée jusqu'à la dernière étape de la transaction. Cette offre définit la prestation et contient des données d'identification du commerçant.
Echange b) : la passerelle authentifie le commerçant et transmet l'offre à l'équipement du client. Elle contient un numéro de transaction, la description du bien, le prix, etc... et les données d'identification de la passerelle.
   Après ces échanges, l'application paiement disposée dans la carte SIM gère les échanges avec l'utilisateur de l'équipement en lui demandant de prendre une décision. Le client a alors la possibilité de confirmer son achat ou de ne pas donner suite. Si le client accepte l'offre qui lui est faite, l'application du SIM l'invite à introduire sa carte bancaire dans le second lecteur de carte de l'équipement GSM puis l'invite à composer son code confidentiel. La suite des opérations est comparable à celle du paiement par carte bancaire avec un équipement tel qu'on les trouve dans les magasins.
Echange c) : l'équipement mobile GSM envoie à la passerelle P un message contenant les données du paiement bancaire, ou au contraire l'annulation de la commande.
Echange e) : en cas de confirmation de l'achat, la passerelle authentifie le client transmet les paramètres bancaires à la banque B.
Echange e') : la banque B examine la possibilité du paiement et en informe la passerelle P.
Echange d) : la passerelle adresse au commerçant l'information relative à la recevabilité du paiement.
Echange f) : le commerçant peut alors, éventuellement, ajouter des informations complémentaires (numéro de code d'une chambre d'hôtel, précision sur l'acheminement du bien, etc...). Il peut aussi annuler la transaction.
Echange g) : le client reçoit de la passerelle les paramètres bancaires de son achat (équivalent d'une facturette) et les éventuelles informations complémentaires du commerçant.

### 3. Equipement mobile avec application bancaire dans la carte SIM

A ces trois scenarii utilisant soit des mobiles de première génération (phase 1 ou phase 2), soit des mobiles de seconde génération (phase 2+), s'ajoute un quatrième scénario : le mobile doit être du type phase 2+ mais ne nécessite pas de lecteur supplémentaire pour la carte CB. L'application TK et les fonctions bancaires sont dans la carte SIM. Le déroulement des échanges est le même qu'avec une carte bancaire, si ce n'est que, dans le terminal du client, les échanges ne se font plus par l'intermédiaire d'un lecteur de carte bancaire puisque les fonctions de la carte bancaire sont intégrées dans la carte SIM.

## Revendications

1. Procédé de télépaiement impliquant une première entité dite "le client"(C) disposant d'un premier équipement téléphonique mobile, une deuxième entité dite "le commerçant" (M) disposant d'un deuxième équipement de télécommunications, et une troisième entité (P), dite "passerelle", disposant d'une troisième équipement de télécommunications apte à établir une liaison avec l'équipement du commerçant (M) et une liaison téléphonique avec l'équipement mobile du client (C), **caractérisé en ce qu'**il comprend les échanges suivants entre les équipements des trois entités :
a) l'équipement du commerçant adresse à l'équipement de la passerelle (P) des données définissant une offre de prestation, avec notamment un montant à acquitter par le client, et ajoute à ces données des données d'identification du commerçant,
b) l'équipement de la passerelle (P) authentifie l'équipement du commerçant, convertit les données de l'offre en un message adapté aux performances de l'équipement mobile du client (C) et adresse à l'équipement du client (C) ce message ainsi que des données d'authentification de la passerelle (P),
c) l'équipement mobile du client (C) authentifie l'équipement de la passerelle (P), l'équipement mobile du client adressant en retour à l'équipement de la passerelle un message d'accord ainsi que des informations permettant le paiement bancaire du montant de la prestation,
d) l'équipement de la passerelle (P) authentifie l'équipement mobile du client (C), vérifie que le paiement est possible et adresse à l'équipement du commerçant (M) un message stipulant que le montant de la prestation est bien susceptible d'être acquitté,
et dans lequel lors des échanges b) et c), l'équipement de la passerelle (P) adresse à l'équipement du client (C) un message lui demandant de la rappeler, l'équipement de la passerelle (P) reçoit l'appel de l'équipement du client (C), authentifie l'équipement du client (C) et lui adresse vocalement alors le message définissant l'offre de prestation faite par l'équipement du commerçant (M).

2. Procédé selon la revendication 1, dans lequel après l'échange c), l'équipement du client (C) communique à l'équipement de la passerelle (P) un mot de passe et dans lequel, avant l'échange d), l'équipement de la passerelle (P) vérifie ledit mot de passe.

3. Procédé selon la revendication 1, dans lequel l'équipement du commerçant (M) adresse son message d'offre vers une passerelle (P) particulière prise parmi plusieurs.

4. Procédé de télépaiement impliquant une première entité dite "le client"(C) disposant d'un premier équipement téléphonique mobile, une deuxième entité dite "le commerçant" (M) disposant d'un deuxième équipement de télécommunications, et une troisième entité (P), dite "passerelle", disposant d'une troisième équipement de télécommunications apte à établir une liaison avec l'équipement du commerçant (M) et une liaison téléphonique avec l'équipement mobile du client (C), **caractérisé en ce que** l'équipement du client comprend une carte d'identification (SIM) propre au client et **en ce qu'**il comprend les échanges suivants entre les équipements des trois entités :
a) l'équipement du commerçant adresse à l'équipement de la passerelle (P) des données relatives à une offre de prestation, avec un montant à acquitter par le client, et ajoute à ces données des données d'identification du commerçant,
b) l'équipement de la passerelle (P) authentifie l'équipement du commerçant et adresse à l'équipement du client (C) un message contenant les données de l'offre et adapté aux performances de l'équipement mobile du client (C), ainsi que des données d'authentification de la passerelle (P),
c) l'équipement mobile du client (C) authentifie l'équipement de la passerelle (P) et par la carte d'identification (SIM), invite le client à composer un code confidentiel, l'équipement mobile du client adressant en retour à l'équipement de la passerelle un message d'accord ainsi que des informations permettant le paiement bancaire du montant de la prestation,
d) l'équipement de la passerelle (P) authentifie l'équipement mobile du client (C), vérifie que le paiement est possible et adresse à l'équipement du commerçant (M) un message stipulant que le montant de la prestation est bien susceptible d'être acquitté.

5. Procédé selon la revendication 4, dans lequel après l'échange d), l'équipement du commerçant (M) renvoie à l'équipement de la passerelle (P) un message de confirmation et J'équipement de la passerelle (P) renvoie à l'équipement mobile du client (C) un message de confirmation.

6. Procédé selon les revendications 4 ou 5, dans lequel l'équipement de la passerelle (P) ayant authentifié l'équipement mobile du client (C) elle demande à une banque (B) de vérifier si le montant de la prestation peut être acquitté et la banque (B) répond à l'équipement de la passerelle (P).

7. Procédé selon la revendication 4, dans lequel, au début de l'échange c), la carte d'identification (SIM) reçoit du client un code confidentiel (CC), vérifie si le code est correct, et, si c'est le cas, la carte d'identification (SIM) chiffre le numéro de la carte bancaire du client à l'aide d'une clé, et l'équipement mobile du client transmet à l'équipement de la passerelle (P) ce numéro chiffré.

8. Procédé selon la revendication 1, dans lequel l'équipement mobile du client authentifie l'équipement de la passerelle (P) au début de l'échange c) à l'aide d'une clé.

9. Procédé selon la revendication 7, dans lequel la clé servant à chiffrer le numéro de carte bancaire du client (C) et la clé servant à authentifier l'équipement de la passerelle (P) sont les mêmes.

10. Procédé selon la revendication 9, dans lequel la carte d'identification (SIM) du client (C) et l'équipement de la passerelle (P) possèdent chacune une clé secrète et une clé publique.

11. Procédé selon, la revendication 4, dans lequel l'équipement mobile du client (C) signe le message d'accord transmis à l'équipement de la passerelle (P) lors de l'échange c) et l'équipement de la passerelle (P) authentifie cette signature.

12. Procédé selon la revendication 4, dans lequel, l'équipement mobile du client (C) adresse à l'équipement de la passerelle (P) des données relatives au paiement bancaire, l'équipement de la passerelle (P) adresse ces données à une banque (B), qui examine la possibilité du paiement et en informe en retour l'équipement de la passerelle (P).

13. Procédé selon la revendication 4, dans lequel, après l'échange d), l'équipement du commerçant (M) renvoie à l'équipement de la passerelle (P) un message de confirmation et l'équipement de la passerelle (P) renvoie à l'équipement du client (C) un message de confirmation.

14. Procédé selon la revendication 4, dans lequel, l'équipement du client (C) comprend une seconde carte de type carte de paiement bancaire (CB), et dans lequel, dans l'échange d), la carte d'identification (SIM) invite le client à introduire sa carte bancaire (CB) dans son équipement mobile puis l'invite à composer son code confidentiel.

15. Procédé selon la revendication 4, dans lequel la carte d'identification (SIM) est apte en outre à remplir des fonctions bancaires.

16. Système de télépaiement pour la mise en oeuvre du procédé selon la revendication 1, comprenant un premier équipement téléphonique mobile utilisé par un client (C), un deuxième équipement de télécommunications utilisé par un commerçant (M) et un troisième équipement (P) de télécommunications utilisé par une passerelle et apte à établir une liaison avec l'équipement du commerçant (M) et une liaison téléphonique avec l'équipement du client (C), ce système étant **caractérisé en ce que** :
a) l'équipement du commerçant (M) comprend des moyens aptes à adresser à l'équipement de la passerelle (P) des données définissant une offre de prestation, avec notamment le montant à acquitter par le client (C) ainsi que des données d'identification du commerçant,
b) l'équipement de la passerelle (P) comprend des moyens d'authentification aptes à authentifier le commerçant (M) à partir des données d'identification de celui-ci et des moyens pour convertir les données de l'offre en un message adapté à l'équipement mobile du client (C) et pour adresser ce message à l'équipement mobile du client avec des données d'identification,
c) l'équipement mobile du client (C) comprend des moyens pour authentifier l'équipement de la passerelle (P), et pour composer un code confidentiel, des moyens pour adresser en retour à l'équipement de la passerelle un message d'accord ainsi que des informations permettant le paiement du montant de la prestation,
d) les moyens d'authentification de l'équipement de la passerelle (P) comprennent en outre des moyens aptes à authentifier le client (C), et des moyens pour s'assurer que le paiement est possible,
et dans lequel, la passerelle (P) comprend des moyens pour adresser au client un message vocal lui demandant de le rappeler, pour authentifier le client (C) et pour lui adresser vocalement le message définissant l'offre de prestation faite par l'équipement du commerçant.

17. Système de télépaiement pour la mise en oeuvre du procédé selon la revendication 4, comprenant un premier équipement téléphonique mobile, utilisé par un client (C), un deuxième équipement de télécommunications utilisé par un commerçant (M) et une troisième équipement (P) de télécommunications utilisé par une passerelle et apte à établir une liaison avec l'équipement du commerçant (M) et une liaison téléphonique avec l'équipement du client (C), ce système étant **caractérisé en ce que** l'équipement téléphonique mobile du client comprend une carte d'identification (SIM) propre au client **en ce que** :
• l'équipement du commerçant (M) comprend des moyens aptes à adresser à l'équipement de la passerelle (P) des données relatives à une offre de prestation, avec un montant à acquitter par le client (C) ainsi que des données d'identification du commerçant,
• l'équipement de la passerelle (P) comprend des moyens d'authentification aptes à authentifier le commerçant (M) à partir des données d'identification de celui-ci et des moyens pour adresser un message contenant les données de l'offre et adapté aux performances de l'équipement mobile du client (C), à l'équipement mobile du client, avec des données d'identification,
• l'équipement mobile du client (C) comprend des moyens pour authentifier l'équipement de la passerelle (P), des moyens utilisant la première carte d'identification (SIM) pour inviter le client à composer un code confidentiel, des moyens pour adresser en retour à l'équipement de la passerelle un message d'accord ainsi que des informations permettant le paiement du montant de la prestation,
• les moyens d'authentification de l'équipement de la passerelle (P) comprend en outre des moyens aptes à authentifier le client (C), et des moyens pour s'assurer que le paiement est possible.

18. Système selon la revendication 17, dans lequel l'équipement du client (C) comprend une seconde carte de type carte de paiement bancaire (CB), cette carte d'identification étant apte à inviter le client à introduire sa carte bancaire (CB) dans son équipement mobile puis à l'inviter à composer son code confidentiel.

19. Système selon la revendication 17, dans lequel la carte d'identification (SIM) est apte en outre à remplir des fonctions bancaires.

## Claims

1. Method of telepayment involving a first entity termed "the customer" (C) having a first item of mobile telephone equipment, a second entity termed "the merchant" (M) having a second item of telecommunications equipment, and a third entity (P), termed "gateway", having a third item of telecommunications equipment able to establish a link with the equipment of the merchant (M) and a telephone link with the mobile item of equipment of the customer (C), **characterized in that** it comprises the following exchanges between the equipment of the three entities:
a) the equipment of the merchant addresses data defining a provision offer to the equipment of the gateway (P), with in particular an amount to be settled by the customer, and supplements these data with data identifying the merchant,
b) the equipment of the gateway (P) authenticates the merchant's equipment, converts the data of the offer into a message tailored to the performance of the mobile equipment of the customer (C) and addresses this message to the equipment of the customer (C) together with data authenticating the gateway (P),
c) the mobile equipment of the customer (C) authenticates the equipment of the gateway (P), the customer's mobile equipment addressing in return an agreement message to the equipment of the gateway together with information allowing bank payment of the amount of the provision,
d) the equipment of the gateway (P) authenticates the mobile equipment of the customer (C) verifies that payment is possible and addresses a message to the equipment of the merchant (M) stipulating that the amount of the provision is indeed capable of being settled,
and in which during the exchanges b) and c), the equipment of the gateway (P) addresses a message to the equipment of the customer (C) asking the latter to call it back, the equipment of the gateway (P) receives the call from the equipment of the customer (C), authenticates the equipment of the customer (C) and then vocally addresses the message to the customer, defining the offer of provision made by the equipment of the merchant (M).

2. Method according to Claim 1, in which during the exchange c), the equipment of the customer (C) communicates a password to the equipment of the gateway (P) and in which, before the exchange d), the equipment of the gateway (P) verifies said password.

3. Method according to Claim 1, in which the equipment of the merchant (M) addresses its offer message to a particular gateway (P) picked from several.

4. Method of telepayment involving a first entity termed "the customer" (C) having a first item of mobile telephone equipment, a second entity termed "the merchant" (M) having a second item of telecommunications equipment, and a third entity (P), termed "gateway", having a third item of telecommunications equipment able to establish a link with the equipment of the merchant (M) and a telephone link with the mobile item of equipment of the customer (C), **characterized in that** the customer's equipment comprises an identification card (SIM) specific to the customer and **in that** it comprises the following exchanges between the equipment of the three entities:
a) the equipment of the merchant addresses data relating to a provision offer to the equipment of the gateway (P), with an amount to be settled by the customer, and supplements these data with data identifying the merchant,
b) the equipment of the gateway (P) authenticates the merchant's equipment, addresses a message containing the data of the offer and tailored to the performance of the mobile equipment of the customer (C) to the equipment of the customer (C) together with data authenticating the gateway (P),
c) the mobile equipment of the customer (C) authenticates the equipment of the gateway (P) and through the identification card (SIM), invites the customer to type in a confidential code, the customer's mobile equipment addressing in return an agreement message to the equipment of the gateway together with information allowing bank payment of the amount of the provision,
d) the equipment of the gateway (P) authenticates the mobile equipment of the customer (C), verifies that payment is possible and addresses a message to the equipment of the merchant (M) stipulating that the amount of the provision is indeed capable of being settled.

5. Method according to Claim 4, in which after the exchange d), the equipment of the merchant (M) returns a confirmation message to the equipment of the gateway (P) and the equipment of the gateway (P) returns a confirmation message to the mobile equipment of the customer (C).

6. Method according to Claim 4 or 5, in which the equipment of the gateway (P) having authenticated the mobile equipment of the customer (C) it requests a bank (B) to verify whether the amount of the provision can be settled and the bank (B) responds to the equipment of the gateway (P).

7. Method according to Claim 4, in which, at the start of the exchange c), the identification card (SIM) receives a confidential code (CC) from the customer, verifies whether this code is correct, and, if such is the case, the identification card (SIM) encrypts the number of the customer's bank card with the aid of a key, and the mobile equipment of the customer transmits this encrypted number to the equipment of the gateway (P).

8. Method according to Claim 1, in which the mobile equipment of the customer authenticates the equipment of the gateway (P) at the start of the exchange c) with the aid of a key.

9. Method according to Claim 7, in which the key serving to encrypt the bank card number of the customer (C) and the key serving to authenticate the equipment of the gateway (P) are the same.

10. Method according to Claim 9, in which the identification card (SIM) of the customer (C) and the equipment of the gateway (P) each possess a secret key and a public key.

11. Method according to Claim 4, in which the mobile equipment of the customer (C) signs the agreement message transmitted to the equipment of the gateway (P) during the exchange c) and the equipment of the gateway (P) authenticates this signature.

12. Method according to Claim 4, in which the mobile equipment of the customer (C) addresses data relating to the bank payment to the equipment of the gateway (P), the equipment of the gateway (P) addresses these data to a bank (B), which examines the possibility of payment and informs in return the equipment of the gateway (P) thereof.

13. Method according to Claim 4, in which, after the exchange d), the equipment of the merchant (M) returns a confirmation message to the equipment of the gateway (P) and the equipment of the gateway (P) returns a confirmation message to the equipment of the customer (C).

14. Method according to Claim 4, in which the equipment of the customer (C) comprises a second card of bank payment card type (CB), and in which, in the exchange d), the identification card (SIM) invites the customer to insert his bank card (CB) into his mobile equipment and then invites him to type in his confidential code.

15. Method according to Claim 4, in which the identification card (SIM) is able moreover to fulfil banking functions.

16. System for telepayment for implementing the method according to Claim 1, comprising a first item of mobile telephone equipment used by a customer (C), a second item of telecommunications equipment used by a merchant (M) and a third item of telecommunications equipment (P) used by a gateway and able to establish a link with the equipment of the merchant (M) and a telephone link with the equipment of the customer (C),
this system being **characterized in that**
a) the equipment of the merchant (M) comprises means able to address data to the equipment of the gateway (P) defining a provision offer, with in particular the amount to be settled by the customer (C) as well as data identifying the merchant,
b) the equipment of the gateway (P) comprises authentication means able to authenticate the merchant (M) on the basis of the latter's identification data and means for converting the data of the offer into a message tailored to the mobile equipment of the customer (C) and for addressing this message to the mobile equipment of the customer with identification data,
c) the mobile equipment of the customer (C) comprises means for authenticating the equipment of the gateway (P), and for typing in a confidential code, means for addressing in return an agreement message to the equipment of the gateway together with confidential information allowing payment of the amount of the provision,
d) the means for authenticating the equipment of the gateway (P) furthermore comprise means able to authenticate the customer (C), and means for making sure that payment is possible,
and in which, the gateway (P) comprises means for addressing a vocal message to the customer requesting the latter to call it back, so as to authenticate the customer (C) and to vocally address the message to him defining the provision offer made by the equipment of the merchant.

17. System for telepayment for implementing the method according to Claim 4, comprising a first item of mobile telephone equipment used by a customer (C), a second item of telecommunications equipment used by a merchant (M) and a third item of telecommunications equipment (P) used by a gateway and able to establish a link with the equipment of the merchant (M) and a telephone link with the equipment of the customer (C),
this system being **characterized in that** the mobile telephone equipment of the customer comprises an identification card (SIM) specific to the customer in that:
• the equipment of the merchant (M) comprises means able to address data to the equipment of the gateway (P) relating to a provision offer, with an amount to be settled by the customer (C) as well as data identifying the merchant,
• the equipment of the gateway (P) comprises authentication means able to authenticate the merchant (M) on the basis of the latter's identification data and means for addressing a message containing the data of the offer and tailored to the mobile equipment of the customer (C) to the mobile equipment of the customer with identification data,
• the mobile equipment of the customer (C) comprises means for authenticating the equipment of the gateway (P), means using the first identification card (SIM) to invite the customer to type in a confidential code, means for addressing in return an agreement message to the equipment of the gateway together with information allowing payment of the amount of the provision,
• the means for authenticating the equipment of the gateway (P) furthermore comprises means able to authenticate the customer (C), and means for making sure that payment is possible.

18. System according to Claim 17, in which the equipment of the customer (C) comprises a second card of bank payment card type (CB), this identification card being able to invite the customer to insert his bank card (CB) into his mobile equipment and then to invite him to type in his confidential code.

19. System according to Claim 17, in which the identification card (SIM) is able moreover to fulfil banking functions.

## Patentansprüche

1. Online-Bezahlungsverfahren, das eine erste, "Kunde" genannte Entität (C), die über eine erste mobile Telefoneinrichtung verfügt, eine zweite, "Händler" genannte Entität (M), die über eine zweite Telekommunikationseinrichtung verfügt, und eine dritte, "Gateway" genannte Entität (P) voraussetzt, die über eine dritte Telekommunikationseinrichtung verfügt, die in der Lage ist, eine Verbindung mit der Einrichtung des Händlers (M) und eine Telefonverbindung mit der mobilen Einrichtung des Kunden (C) aufzubauen, **dadurch gekennzeichnet, dass** es die folgenden Austauschvorgänge zwischen den Einrichtungen der drei Entitäten aufweist:
a) die Einrichtung des Händlers übermittelt an die Einrichtung des Gateways (P) Daten, die ein Dienstleistungsangebot definieren, mit insbesondere einem vom Kunden zu entrichtenden Betrag, und fügt diesen Daten Identifikationsdaten des Händlers hinzu,
b) die Einrichtung des Gateways (P) authentifiziert die Einrichtung des Händlers, wandelt die Daten des Angebots in eine Mitteilung um, die an die Leistungen der mobilen Einrichtung des Kunden (C) angepasst ist, und übermittelt an die Einrichtung des Kunden (C) diese Mitteilung sowie Authentifizierungsdaten des Gateways (P),
c) die mobile Einrichtung des Kunden (C) authentifiziert die Einrichtung des Gateways (P), wobei die mobile Einrichtung des Kunden an die Einrichtung des Gateways eine Zustimmungsmitteilung sowie Informationen zurück übermittelt, die die Bankzahlung des Betrags der Dienstleistung erlauben,
d) die Einrichtung des Gateways (P) authentifiziert die mobile Einrichtung des Kunden (C), prüft, ob die Zahlung möglich ist, und übermittelt an die Einrichtung des Händlers (M) eine Mitteilung, die bestimmt, dass der Betrag der Dienstleistung entrichtet werden kann,
und bei dem während der Austauschvorgänge b) und c) die Einrichtung des Gateways (P) an die Einrichtung des Kunden (C) eine Mitteilung übermittelt, die sie auffordert, sie zurückzurufen, wobei die Einrichtung des Gateways (P) den Anruf von der Einrichtung des Kunden (C) empfängt, die Einrichtung des Kunden (C) authentifiziert und ihr dann per Stimme die Mitteilung übermittelt, die das Dienstleistungsangebot definiert, das von der Einrichtung des Händlers (M) gemacht wird.

2. Verfahren nach Anspruch 1, bei dem beim Austausch c) die Einrichtung des Kunden (C) der Einrichtung des Gateways (P) ein Passwort mitteilt, und bei dem vor dem Austausch d) die Einrichtung des Gateways (P) das Passwort überprüft.

3. Verfahren nach Anspruch 1, bei dem die Einrichtung des Händlers (M) ihre Angebotmitteilung an ein besonderes Gateway (P) unter mehreren übermittelt.

4. Online-Bezahlungsverfahren, das eine erste, "Kunde" genannte Entität (C), die über eine erste mobile Telefoneinrichtung verfügt, eine zweite, "Händler" genannte Entität (M), die über eine zweite Telekommunikationseinrichtung verfügt, und eine dritte, "Gateway" genannte Entität (P) voraussetzt, die über eine dritte Telekommunikationseinrichtung verfügt, die in der Lage ist, eine Verbindung mit der Einrichtung des Händlers (M) und eine Telefonverbindung mit der mobilen Einrichtung des Kunden (C) aufzubauen, **dadurch gekennzeichnet, dass** die Einrichtung des Kunden eine dem Kunden eigene Identifikationskarte (SIM) aufweist, und dass es die folgenden Austauschvorgänge zwischen den Einrichtungen der drei Entitäten aufweist:
a) die Einrichtung des Händlers übermittelt an die Einrichtung des Gateways (P) Daten, die auf ein Dienstleistungsangebot bezüglich sind, mit einem vom Kunden zu entrichtenden Betrag, und fügt diesen Daten Identifikationsdaten des Händlers hinzu,
b) die Einrichtung des Gateways (P) authentifiziert die Einrichtung des Händlers und übermittelt an die Einrichtung des Kunden (C) eine Mitteilung, die die Daten des Angebots enthält and an die Leistungen der mobilen Einrichtung des Kunden (C) angepasst ist, sowie Authentifizierungsdaten des Gateways (P),
c) die mobile Einrichtung des Kunden (C) authentifiziert die Einrichtung des Gateways (P) und fordert durch die Identifikationskarte (SIM) den Kunden auf, einen persönlichen Identifikationscode einzugeben, wobei die mobile Einrichtung des Kunden an die Einrichtung des Gateways eine Zustimmungsmitteilung sowie Informationen zurückschickt, die die Bankzahlung des Betrags der Dienstleistung erlauben,
d) die Einrichtung des Gateways (P) authentifiziert die mobile Einrichtung des Kunden (C), prüft, ob die Zahlung möglich ist, und übermittelt an die Einrichtung des Händlers (M) eine Mitteilung, die bestimmt, dass der Betrag der Dienstleistung entrichtet werden kann.

5. Verfahren nach Anspruch 4, bei dem nach dem Austausch d) die Einrichtung des Händlers (M) an die Einrichtung des Gateways (P) eine Bestätigungsmitteilung zurückschickt, und die Einrichtung des Gateways (P) an die mobile Einrichtung des Kunden (C) eine Bestätigungsmitteilung zurückschickt.

6. Verfahren nach den Ansprüchen 4 oder 5, bei dem die Einrichtung des Gateways (P), nachdem sie die mobile Einrichtung des Kunden (C) authentifiziert hat, eine Bank (B) auffordert, zu überprüfen, ob der Betrag der Dienstleistung entrichtet werden kann, und die Bank (B) der Einrichtung des Gateways (P) antwortet.

7. Verfahren nach Anspruch 4, bei dem zu Beginn des Austauschs c) die Identifikationskarte (SIM) vom Kunden einen persönlichen Identifikationscode (CC) empfängt, überprüft, ob dieser Code korrekt ist, und wenn dies der Fall ist, die Identifikationskarte (SIM) die Nummer der Bankkarte des Kunden mit Hilfe eines Schlüssels verschlüsselt, und die mobile Einrichtung des Kunden diese verschlüsselte Nummer an die Einrichtung des Gateways (P)überträgt.

8. Verfahren nach Anspruch 1, bei dem die mobile Einrichtung des Kunden die Einrichtung des Gateways (P) zu Beginn des Austauschs c) mit Hilfe eines Schlüssels authentifiziert.

9. Verfahren nach Anspruch 7, bei dem der Schlüssel, der zur Verschlüsselung der Nummer der Bankkarte des Kunden (C) dient, und der Schlüssel, der zur Authentifizierung der Einrichtung des Gateways (P) dient, die gleichen sind.

10. Verfahren nach Anspruch 9, bei dem die Identifikationskarte (SIM) des Kunden (C) und die Einrichtung des Gateways (P) je einen geheimen Schlüssel und einen öffentlichen Schlüssel besitzen.

11. Verfahren nach Anspruch 4, bei dem die mobile Einrichtung des Kunden (C) die Zustimmungsmitteilung signiert, die an die Einrichtung des Gateways (P) während des Austauschs c) übertragen wird, und die Einrichtung des Gateways (P) diese Signatur authentifiziert.

12. Verfahren nach Anspruch 4, bei dem die mobile Einrichtung des Kunden (C) an die Einrichtung des Gateways (P) Daten bezüglich der Bankzahlung übermittelt, die Einrichtung des Gateways (P) diese Daten an eine Bank (B) übermittelt, die die Möglichkeit der Zahlung untersucht und die Einrichtung des Gateways (P) im Gegenzug darüber informiert.

13. Verfahren nach Anspruch 4, bei dem nach dem Austausch d) die Einrichtung des Händlers (M) an die Einrichtung des Gateways (P) eine Bestätigungsmitteilung zurückschickt, und die Einrichtung des Gateways (P) an die Einrichtung des Kunden (C) eine Bestätigungsmitteilung zurückschickt.

14. Verfahren nach Anspruch 4, bei dem die Einrichtung des Kunden (C) eine zweite Karte vom Typ Bankzahlungskarte (CB) aufweist, und bei dem im Austausch d) die Identifikationskarte (SIM) den Kunden auffordert, seine Bankkarte (CB) in seine mobile Einrichtung einzuführen und ihn dann auffordert, seinen persönlichen Identifikationscode einzugeben.

15. Verfahren nach Anspruch 4, bei dem die Identifikationskarte (SIM) außerdem in der Lage ist, Bankfunktionen zu erfüllen.

16. Online-Zahlungssystem zur Anwendung des Verfahrens nach Anspruch 1, mit einer ersten mobilen Telefoneinrichtung, die von einem Kunden (C) verwendet wird, einer zweiten Telekommunikationseinrichtung, die von einem Händler (M) verwendet wird, und einer dritten Telekommunikationseinrichtung, die von einem Gateway verwendet wird und in der Lage ist, eine Verbindung mit der Einrichtung des Händlers (M) und eine Telefonverbindung mit der Einrichtung des Kunden (C) aufzubauen,
wobei dieses System **dadurch gekennzeichnet ist, dass**:
a) die Einrichtung des Händlers (M) Mittel aufweist, die in der Lage sind, an die Einrichtung des Gateways (P) Daten zu übermitteln, die ein Dienstleistungsangebot definieren, mit insbesondere dem vom Kunden (C) zu entrichtenden Betrag sowie mit Identifikationsdaten des Händlers,
b) die Einrichtung des Gateways (P) Authentifizierungsmittel, die in der Lage sind, den Händler (M) ausgehend von dessen Identifikationsdaten zu authentifizieren, und Mittel aufweist, um die Daten des Angebots in eine Mitteilung umzuwandeln, die an die mobile Einrichtung des Kunden (C) angepasst ist, und um diese Mitteilung an die mobile Einrichtung des Kunden mit Identifikationsdaten zu übermitteln,
c) die mobile Einrichtung des Kunden (C) Mittel aufweist, um die Einrichtung des Gateways (P) zu authentifizieren und um einen persönlichen Identifikationscode einzugeben, Mittel, um an die Einrichtung des Gateways eine Zustimmungsmitteilung sowie vertrauliche Informationen zurück zu übermitteln, die die Zahlung der Dienstleistung erlauben,
d) die Authentifizierungsmittel der Einrichtung des Gateways {P) außerdem Mittel, die in der Lage sind, den Kunden (C) zu authentifizieren, und Mittel aufweisen, um sich zu vergewissern, dass die Zahlung möglich ist,
und bei dem das Gateway (P) Mittel aufweist, um an den Kunden eine Voice-Mail zu übermitteln, die ihn auffordert, es zurückzurufen, um den Kunden (C) zu authentifizieren und um ihm per Stimme die Mitteilung zu übermitteln, die das von der Einrichtung des Händlers gemachte Dienstleistungsangebot definiert.

17. Online-Zahlungssystem zur Anwendung des Verfahrens nach Anspruch 4, mit einer ersten mobilen Telefoneinrichtung, die von einem Kunden (C) verwendet wird, einer zweiten Telekommunikationseinrichtung, die von einem Händler (M) verwendet wird, und einer dritten Telekommunikationseinrichtung, die von einem Gateway (P) verwendet wird und in der Lage ist, eine Verbindung mit der Einrichtung des Händlers (M) und eine Telefonverbindung mit der Einrichtung des Kunden (C) aufzubauen,
wobei dieses System **dadurch gekennzeichnet ist, dass** die mobile Telefoneinrichtung des Kunden eine dem Kunden eigene Identifikationskarte (SIM) aufweist, dass:
• die Einrichtung des Händlers (M) Mittel aufweist, die in der Lage sind, an die Einrichtung des Gateways (P) Daten zu übermitteln, die auf ein Dienstleistungsangebot bezüglich sind, mit dem vom Kunden (C) zu entrichtenden Betrag sowie Identifikationsdaten des Händlers,
• die Einrichtung des Gateways (P) Authentifizierungsmittel, die in der Lage sind, den Händler (M) ausgehend von dessen Identifikationsdaten zu authentifizieren, und Mittel aufweist, um eine Mitteilung, die die Daten des Angebots enthält and an die Leistungen der mobilen Einrichtung des Kunden (C) angepasst ist, an die mobile Einrichtung des Kunden mit Identifikationsdaten zu übermitteln,
• die mobile Einrichtung des Kunden (C) Mittel zur Authentifizierung der Einrichtung des Gateways (P), Mittel, die die erste Identifikationskarte (SIM) nutzen, um den Kunden aufzufordern, einen persönlichen Identifikationscode einzugeben, und Mittel aufweist, um an die Einrichtung des Gateways eine Zustimmungsmitteilung sowie Informationen zurück zu übermitteln, die die Zahlung des Betrags der Dienstleistung erlauben,
• die Authentifizierungsmittel der Einrichtung des Gateways (P) außerdem Mittel, die in der Lage sind, den Kunden (C) zu authentifizieren, und Mittel aufweisen, um sich zu vergewissern, dass die Zahlung möglich ist.

18. System nach Anspruch 17, bei dem die Einrichtung des Kunden (C) eine zweite Karte vom Typ Bankzahlungskarte (CB) aufweist, wobei diese Identifikationskarte in der Lage ist, den Kunden aufzufordern, seine Bankkarte (CB) in seine mobile Einrichtung einzuführen und ihn dann aufzufordern, seinen persönlichen Identifikationscode einzugeben.

19. System nach Anspruch 17, bei dem die Identifikationskarte (SIM) außerdem in der Lage ist, Bankfunktionen zu erfüllen.
